# EUROPÄISCHE PATENTSCHRIFT

(11) **EP 1 458 511 B1**
(45) Veröffentlichungstag und Bekanntmachung des Hinweises auf die Patenterteilung: **08.03.2006**
(21) Anmeldenummer: 02796642.3
(22) Anmeldetag: 16.12.2002
(51) Int. Cl.: B23C 5/10, B23C 3/02

(54) **WERKZEUG ZUR SPANABTRAGENDEN BEARBEITUNG EINER KONKAVEN, KUGELFÖRMIGEN OBERFLÄCHE**
TOOL FOR CHIPPING A CONCAVE, SPHERICAL SURFACE
OUTIL POUR USINER UNE SURFACE SPHERIQUE CONCAVE PAR ENLEVEMENT DE COPEAUX

(30) Priorität: 21.12.2001 DE 10164459
(43) Veröffentlichungstag der Anmeldung: 22.09.2004
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); STROM, Rudolf, 71665 VAIHINGEN/ENZ (DE)
(74) Vertreter: Gleiss & Grosse
(86) Internationale Anmeldenummer: PCT/EP2002/014316
(87) Internationale Veröffentlichungsnummer: WO 2003/053619

(56) Entgegenhaltungen:
- EP-A- 0 307 949
- DE-C- 3 642 514
- FR-A- 2 483 819
- US-A- 5 232 317
- US-B1- 6 220 794

## Beschreibung

Die Erfindung betrifft ein Werkzeug zur spanabtragenden Bearbeitung einer konkaven, kugelförmigen. Oberfläche eines Werkstücks mit einem Werkzeugkopf, der mindestens eine Messerplatte umfasst, die wenigstens eine Schneide aufweist. Die Messerplatte ist in eine in den Grundkörper des Werkzeugkopfs eingebrachte Ausnehmung eingesetzt und in dieser fixiert. Sie ist unter einem spitzen Winkel geneigt angeordriet und zwar gegenüber einer gedachten, im Bereich der Messerplatte tangential zur Oberfläche des Werkzeugs verlaufenden Ebene.

Werkzeuge der hier angesprochenen Art sind bekannt (US-B1 6 220 794, US-A 5 232 317). Sie dienen dazu, Innen-Kugelflächen beziehungsweise -Teilflächen an Gehäuseinnenteilen zu bearbeiten. Beispielsweise werden sie eingesetzt für die Bearbeitung der Innenfläche eines .Differentialgehäuses von Kraftfahrzeugen. Das Werkzeug weist einen Werkzeugkopf mit mindestens einer Schneide auf, die über die Oberfläche des Werkzeugkopfs ragt und bei einer Relativdrehbewegung zwischen der zu bearbeitenden Werkstückoberfläche und dem Werkzeug Späne von der Oberfläche abträgt. Die Messerplatte (n) des Werkzeugkopfs weisen konvex gekrümmte Schneiden auf, wobei der Krümmungsradius der Schneiden dem Radius der Innen-Kugelfläche der zu bearbeitenden Werkstückfläche entspricht. Die Schneidplatten können im Wesentlichen senkrecht zur Oberfläche des Werkzeugkopfs in dessen Grundkörper eingesetzt werden oder mehr oder weniger tangential, also einen spitzen Winkel zu einer gedachten Ebene einschließen, die den Werkzeugkopf in dem Bereich berührt, in dem die Messerplatte angebracht ist. Derartig angeordnete Messerplatten werden auch als Tangentialplatten bezeichnet. Auf ihrer Außenseite weisen derartige Messerplatten einen gewölbten Bereich auf, der in eine Seitenfläche der Messerplatte übergeht. Die Schnittlinie zwischen dem gewölbten Bereich und der Seitenfläche bildet die konvex gekrümmte Schneide dieser Tangentialplatte. Der Krümmungsradius der Schneide entspricht auch hier dem Radius der Innen-Kugelfläche der zu bearbeitenden Fläche des Werkstücks.

Nachteil ist, dass derartige Tangentialplatten in der Herstellung sehr aufwendig sind und dass der Krümmungsradius ihrer Schneiden, wie der der oben angesprochenen senkrecht in den Grundkörper des Werkzeugkopfs eingelassenen Schneiden, unmittelbar dem Radius der zu bearbeitenden Innen-Kugelfläche entspricht. Fertigungstoleranzen bei der Herstellung der Schneiden beeinträchtigen die Genauigkeit der bearbeiteten Kugelfläche. Dies gilt auch für Verschleiß derartiger Messerplatten, dieser beeinträchtigt also ebenfalls die Genauigkeit der bearbeiteten Kugelfläche. Daher ist die Herstellung derartiger Messerplatten beziehungsweise Werkzeuge sehr aufwendig und kostenintensiv.

Es hat sich im Übrigen herausgestellt, dass die bekannten Werkzeuge zum Rattern neigen, was einerseits die Standzeiten des Werkzeugs und andererseits die Oberflächenqualität der bearbeiteten Werkstücke nachteilig beeinflusst.

Aufgabe der Erfindung ist es daher, ein Werkzeug der eingangs genannten Art zu schaffen, das diese Nachteile nicht aufweist.

Zur Lösung dieser Aufgabe wird ein Werkzeug vorgeschlagen, das die in Anspruch 1 genannten Merkmale zeigt . Es zeichnet sich dadurch aus, dass es mindestens eine Messerplatte mit einer ebenen Vorderseite und einer sich daran anschließenden Umfangsfläche aufweist. Die mindestens eine Schneide der Messerplatte wird durch einen Bereich der Schnittlinie gebildet, die durch den Schnitt der ebenen Vorderseite mit der Umfangsfläche entsteht. Die Schneide ist dadurch gekennzeichnet, dass sie konvex gekrümmt ist.

Vorteil dieses Werkzeugs ist die einfache Herstellbarkeit der Messerplatte. Dadurch dass deren Vorderseite eben ist, kann zu deren Herstellung ein einfacher Schleifvorgang durchgeführt werden. Es ist also nicht erforderlich, hier gekrümmte Bereiche vorzusehen, deren Herstellung, insbesondere exakte Herstellung, relativ aufwendig und kostenintensiv ist.

Die Schneide liegt im Bereich der Schnittlinie der Vorderseite und der Umfangsfläche. Die Krümmung der Schneide liegt in der Ebene der Vorderseite der Messerplatte. Das heißt, bei Draufsicht auf die Messerplatte ergibt sich im Bereich der Schneide eine konvex gekrümmte Linie, während sich bei der Draufsicht auf eine herkömmliche Messerplatte, deren Schneide durch eine gewölbte Vorderseite dieser Messerplatte gebildet wird, in der Draufsicht gesehen geradlinig verläuft.

Die gekrümmte Schneide der erfindungsgemäßen Messerplatte trifft bei der Bearbeitung des Werkstücks mit einem Bereich der konvexen Krümmung auf die zu bearbeitende Werkzeugfläche. Daran sich anschließende Bereiche der Schneide treten dann erst mit dem Werkstück in Eingriff. Es ergibt sich damit ein so genannter Schälschnitt, der die Schneide viel weicher in das Werkstück einlaufen lässt, als dies bei Werkzeugen der herkömmlichen Art der Fall ist. Dadurch neigt das Werkzeug viel weniger zum Rattern und zeichnet sich durch eine sehr gute Laufruhe aus. Dies bewirkt einerseits erhöhte Standzeiten, andererseits verbesserte Bearbeitungsergebnisse bezüglich der gefertigten Oberfläche.

Ein bevorzugtes Ausführungsbeispiel des Werkzeugs zeichnet sich dadurch aus, dass die Vorderseite der Messerplatte mit der Umfangsfläche einen Winkel einschließt, der kleiner 90° ist, wobei der Scheitelpunkt des Winkels mit der Schneide zusammenfällt. Dadurch ergibt sich bei Bearbeitung eines Werkstücks ein positiver Spanwinkel. Dem gegenüber wird mit den bekannten Werkzeugen nur ein Spanwinkel von 0° oder gar ein leicht negativer Spanwinkel erreicht. Aufgrund des positiven Spanwinkels können mit dem Werkzeug ein besonders weicher Schnitt und eine hervorragende.Oberfläche erreicht werden. Darüber hinaus werden bei der Bearbeitung des Werkstücks entstehende Späne besser nach außen aus dem Bearbeitungsbereich hinaus abgelenkt, so dass Störungen oder eine negative Beeinflussung der bearbeiteten Oberfläche vermieden werden können.

Weitere Ausgestaltungen ergeben sich aus den übrigen Unteransprüchen.

Die Erfindung wird im Folgenden anhand der Zeichnung näher erläutert. Es zeigen:
- Figur 1: eine Prinzipskizze eines Werkzeugs bei der Bearbeitung eines Werkstücks;
- Figur 2: eine vergrößerte Seitenansicht des Werkzeugs an sich;
- Figur 3: eine Vorderansicht des Werkzeugs gemäß Figur 2:
- Figur 4: eine perspektivische Ansicht des Werkzeugs;
- Figur 5: eine Vorderansicht einer Messerplatte;
- Figur 6: eine Seitenansicht einer Messerplatte und
- Figur 7: eine perspektivische Ansicht der Messerplatte gemäß den Figuren 4 und 5.

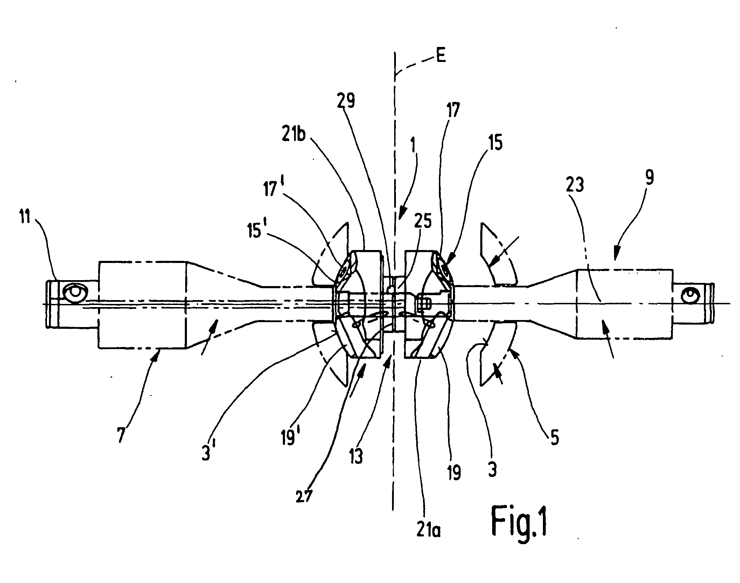

Die Prinzipskizze gemäß Figur 1 zeigt ein Werkzeug 1, das zur Bearbeitung einer konkaven, kugelförmigen Oberfläche 3 eines Werkstücks 5 zwischen einer Antriebsspindel 7 und einer Abstützspindel 9 so eingespannt ist, dass es innerhalb des Werkstücks 5 angeordnet ist. Das Werkstück ist hier nur teilweise dargestellt. Es kann sich beispielsweise um das Gehäuse eines Differentialgetriebes handeln.

Das Werkzeug 1 ist mit der Antriebsspindel 7 drehfest verbunden, so dass es über diese in Rotation versetzt werden kann. Dazu kann die Antriebsspindel 7 über einen geeigneten Befestigungsansatz, der beispielsweise als Hohlschaft 11 ausgebildet ist, mit einer hier nicht dargestellten Werkzeugmaschine verbunden werden. Das Werkzeug 1 wird einerseits über die Antriebsspindel 7 und andererseits über die Abstützspindel 9 so gehalten, dass es innerhalb des Werkstücks 5 in Rotation versetzt werden kann, um von der Oberfläche 3 Späne abzutragen.

Dazu weist das Werkzeug 1 einen Werkzeugkopf 13 auf, der zumindest eine konvex gekrümmte Außenfläche 15 umfasst, in die mindestens eine Messerplatte 17 eingelassen ist. Bei dem hier dargestellten Ausführungsbeispiel sind in der Außenfläche 15 zwei Messerplatten, nämlich die Messerplatte 17 und die Messerplatte 19 eingelassen.

Bei dem hier dargestellten Ausführungsbeispiel weist das Werkzeug 1 einen Werkzeugkopf 13 auf, der zwei Teilbereiche 21a und 21b aufweist. Der erste Teilbereich 21a weist die bereits beschriebene Außenfläche 15 mit den Messerplatten 17 und 19 auf. Der zweite Teilbereich 21b ist identisch aufgebaut und symmetrisch zu einer gedachten Ebene E angeordnet, die zwischen den Teilbereichen 21a und 21b verläuft und senkrecht auf der Drehachse 23 des Werkzeugs 1 steht. Entsprechend weist der zweite Teilbereich 21b mindestens eine Messerplatte auf, hier zwei Messerplatten 17' und 19', die in die konvex ausgebildete Außenfläche 15' des zweiten Teilbereichs 21b eingelassen sind.

Die Teilbereiche 21a und 21b des Werkzeugkopfs 13 sind über einen Verbindungssteg 25 miteinander verbunden, in dessen Außenfläche eine vorzugsweise umlaufende Nut 27 und eine Ausnehmung, vorzugsweise Bohrung 29, eingebracht sind. Das Werkzeug 1 kann im Bereich des Verbindungsstegs mittels eines geeigneten Greifwerkzeugs erfasst werden, das in die Nut 27 eingreift. Eine definierte Drehlage des Werkzeugs 1 gegenüber dem hier nicht dargestellten Greifwerkzeug ergibt sich dadurch, dass dieses mittels eines Positionierstifts in die Bohrung 29 eingreift. Damit ist das Werkzeug 1 bei zurückgefahrener Antriebsspindel 7 und Abstützspindel 9 aus dem Inneren des Werkstücks 5 herausnehmbar, beispielsweise bei einem Werkzeugwechsel. Es ist auch möglich, ein Werkzeug 1 mittels eines Greifwerkzeugs definiert in das Innere des Werkstücks 5 zur Bearbeitung der Oberfläche 3 einzubringen. Durch die definierte Position des Werkzeugs 1 können die Antriebsspindel 7 und die Abstützspindel 9 ohne weiteres in das Werkzeug 1 eingeführt werden, um dieses anzutreiben und abzustützen. Zur Bearbeitung der Oberfläche 3 ist grundsätzlich ein Werkzeug 1 verwendbar, das lediglich einen der Teilbereiche 21a beziehungsweise 21b aufweist. Es bedarf dann lediglich der Herausnahme des Werkzeuges 1 aus dem Inneren des Werkstücks und einer Drehung um 180°, um den zweiten Bereich der Oberfläche 3 bearbeiten zu können.

Vorzugsweise wird aber das hier dargestellte Werkzeug 1 mit zwei Teilbereichen 21a, 21b eingesetzt. Es können damit ohne Werkzeugwechsel alle gewünschten Oberflächen innerhalb des Werkstücks 5 bearbeitet werden, in dem das Werkzeug 1 lediglich axial verlagert wird, also in Richtung seiner Drehachse 23.

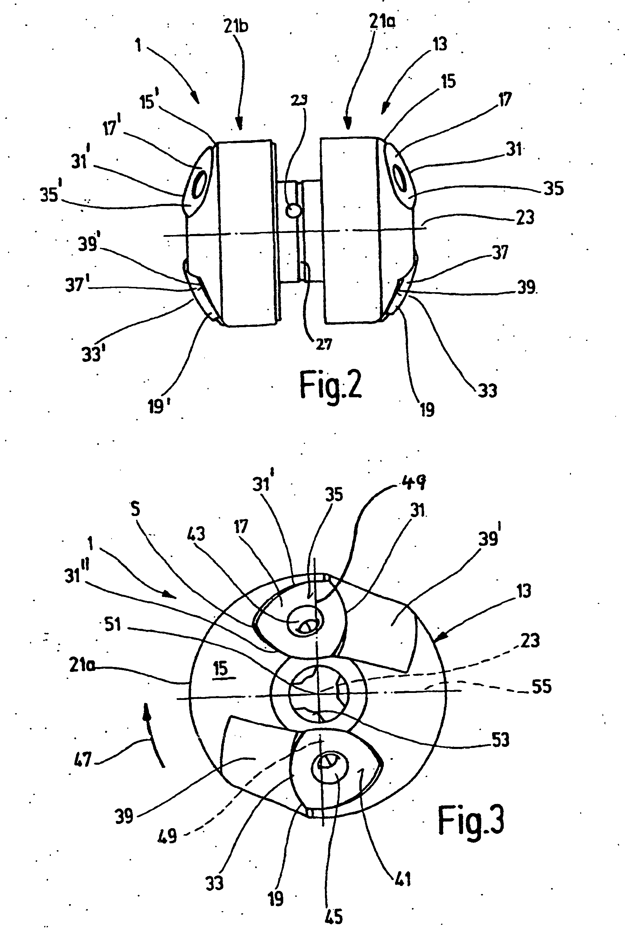

Figur 2 zeigt vergrößert den Werkzeugkopf 13 des Werkzeugs 1. Gleiche Teile sind mit gleichen Bezugsziffern versehen, so dass insofern auf die Beschreibung zu Figur 1 verwiesen wird. Aus der Vergrößerung ist deutlich erkennbar, dass die Messerplatten 17, 19, 17' und 19' so in die Außenfläche 15 beziehungsweise 15' der Teilbereiche 21a, 26b eingesetzt sind, dass sie teilweise über diese Außenfläche ragen. Diese über die Außenfläche hervorstehenden Bereiche der Messerplatten bilden bei einer Rotation des Werkzeugs 1 die aktiven Schneiden des Werkzeugs 1. Dabei sind die Schneide 31 der ersten Messerplatte 17 und die Schneide 33 der zweiten Messerplatte 19 dem ersten Teilbereich 21a, und die Schneide 31' der ersten Messerplatte 17' und die Schneide 31' der zweiten Messerplatte 19' dem zweiten Teilbereich 21b zugeordnet.

Bei der Darstellung gemäß Figur 2 sieht man bei den Messerplatten 17, 17', die oberhalb der Drehachse 23 des Werkzeugs 1 angeordnet sind, deren Vorderseite 35 beziehungsweise 35'. Bei den unterhalb der Drehachse angeordneten Messerplatten 19, 19' sieht man auf die Spanflächen 37 beziehungsweise 37' der Messerplatten 19, 19'. Jeweils vor den Messerplatten befindet sich - in Drehrichtung des Werkzeugs 1 gesehen - ein Spanraum 39 beziehungsweise 39', in den die von den Schneiden 33 und 33' abgetragenen Späne einlaufen.

Figur 3 zeigt das anhand der Figuren 1 und 2 erläuterte Werkzeug 1 in Draufsicht auf den ersten Teilabschnitt 21a. Gleiche Teile sind mit gleichen Bezugsziffern versehen, so dass insofern auf die vorangegangenen Erläuterungen verwiesen wird.

In die Außenfläche 15 des ersten Teilabschnitts 21a sind die erste Messerplatte 17 und die zweite Messerplatte 19 eingelassen. In der hier wiedergegebenen Ansicht sind die Vorderseiten 35 und 41 dieser Messerplatten deutlich ersichtlich. Angedeutet sind Ausnehmungen 43 und 45, die die Messerplatten 17 und 19 durchdringen. Durch diese können Schrauben geführt werden, die in den Grundkörper des Werkzeugs 1 eingreifen und damit die Messerplatten fest mit diesem verbinden. Grundsätzlich ist es auch möglich, die Messerplatten mit dem Grundkörper zu verlöten. Die Schraubbefestigung hat jedoch den Vorteil, dass die Messerplatten austauschbar sind und, wie hier dargestellt, auch als Wendeplatten ausgebildet werden können. Darauf wird später noch näher eingegangen.

Bei der Bearbeitung einer Oberfläche dreht sich bei der Ansicht gemäß Figur 3 das Werkzeug im Uhrzeigersinn, was durch einen Pfeil 47 angedeutet ist. Bei der ersten Messerplatte 17 steht deren rechte Kante über die Außenfläche 15 des ersten Teilbereichs 21a und bildet damit die Schneide 31 dieser Messerplatte. In Drehrichtung gesehen liegt vor der Schneide 31 der Spanraum 39', in den die von der Schneide 31 abgetragenen Späne einlaufen.

Die Schneide 31 ist konvex ausgebildet, also von der Ausnehmung 43 nach außen gewölbt. Sie ist so angeordnet, dass sie praktisch parallel zu einer senkrechten Durchmesserlinie 49 angeordnet ist. Das heißt, der am weitesten in Drehrichtung vorstehende Scheitelpunkt der Schneide 31 ist von der Durchmesserlinie 49 am weitesten entfernt. Die sich daran nach oben und unten anschließenden Bereiche der Schneide 31 sind symmetrisch zu diesem Scheitelpunkt ausgebildet und nähern sich gleichmäßig der Durchmesserlinie 49 an.

Durch die konvexe Ausbildung der Schneide 31 wird erreicht, dass bei der Bearbeitung einer Oberfläche 3 sich ein Schälschnitt ergibt, das heißt, die Schneide läuft sehr weich in das bearbeitete Werkstück ein. Durch die Krümmung der Schneide 31 wird erreicht, dass die abgetragenen Späne - von der Drehachse 23 des Werkzeugs 1 aus gesehen - nach außen befördert werden. Dies führt dazu, dass das Werkzeug 1 sehr wenig zum Rattern neigt und sich durch eine sehr gute Laufruhe auszeichnet. Dadurch ergeben sich erhöhte Standzeiten und verbesserte Bearbeitungsergebnisse.

Das Werkzeug 1 weist eine sich in die Außenfläche 15 öffnende zentrale Ausnehmung 51 auf, die grundsätzlich kreiszylindrisch ausgebildet ist. Von ihrer Innenfläche springen Vorsprünge 53 in Richtung der Drehachse 23 vor, die dazu dienen, eine drehfeste. Verbindung mit der Antriebsspindel 7 zu gewährleisten.

Aus der Draufsicht ist ersichtlich, dass die Messerplatte 17, 19 drei gleichartige Schneiden aufweisen und im Wesentlichen dreieckförmig ausgebildet sind. Die Seitenkanten des Dreiecks sind alle gekrümmt, wie dies anhand der Schneide 31 beschrieben wurde. Die sich an die Schneide 31 anschließenden Schneiden 31' und 31" sind in einer Ausnehmung im Grundkörper des ersten Teilbereichs 21a versenkt angeordnet, so dass, wie gesagt, ausschließlich die Schneide 31 über die Außenfläche 15 hervorragt.

Die Messerplatte 17 ist ausgehend von der Drehachse 23 nach außen abfallend angeordnet, so dass also im Bereich der Durchmesserlinie 49 die Schneide 31" höher liegt, als die Schneide 31'. Die Messerplatte 17 schließt also mit einer gedachten Ebene, auf der die Drehachse 23 senkrecht steht, einen spitzen Winkel ein, der sich, ausgehend von der Drehachse 23, radial nach außen öffnet und im Bereich von circa 15° bis 35° liegt, insbesondere im Bereich von 20° bis 30°. Vorzugsweise wird ein Neigungswinkel von circa 25° gewählt.

Die Messerplatte 17 ist außerdem in Richtung einer horizontalen Durchmesserlinie 55 geneigt angeordnet, das heißt, der Scheitelpunkt der Schneide 31 ist der höchste Punkt der ersten Messerplatte 17 und der gegenüber liegende Schnittpunkt S der Schneiden 31' und 31" der tiefste Punkt. Der Neigungswinkel in Richtung der horizontalen Durchmesserlinie 55 kann im Bereich von circa 5° bis 15° liegen, insbesondere im Bereich von circa 2,5° bis 12,5°. Vorzugsweise wird ein Winkel von circa 10° gewählt. Damit schließt die Vorderseite 35 der Messerplatte 17 mit der gedachten Ebene, auf der die Drehachse 23 senkrecht steht, in Richtung der horizontalen Durchmesserlinie 55 vorzugsweise einen Winkel von etwa 10° ein. Die Messerplatte 17 ist also gegenüber dieser gedachten Ebene in zwei Richtungen geneigt in die Außenfläche 15 des Werkzeugkopfs 13 eingesetzt.

Bei der Darstellung gemäß Figur 3 liegt die Schneide 31 der ersten Messerplatte 17 quasi im ersten Quadranten der senkrechten Durchmesserlinie 49 und der horizontalen Durchmesserlinie 55. Punktsymmetrisch gegenüber liegend befindet sich die Schneide 33 der zweiten Messerplatte 19, deren Scheitelpunkt die höchste Stelle der zweiten Messerplatte 19 bildet. Diese ist entsprechend wie die erste Messerplatte 17 ausgebildet, so dass auf das zur ersten Messerplatte 17 Gesagte verwiesen wird. Auch die Neigung der zweiten Messerplatte 19 entspricht der der ersten Messerplatte 17: Die zweite Messerplatte 19 ist in Richtung der senkrechten Durchmesserlinie 49 geneigt angeordnet und fällt von der Durchmesserlinie 23 nach außen ab. Entsprechend ist sie auch zur horizontalen Durchmesserlinie 55 geneigt, allerdings in entgegengesetzter Richtung wie die erste Messerplatte 17. Die Winkelverhältnisse hier entsprechen denen der ersten Messerplatte.

Auch der Werkzeugkopf 13 ist im dritten Quadranten entsprechend ausgebildet wie im ersten: In Drehrichtung gesehen befindet sich vor der Schneide 33 der Spanraum 39, in den die von der Schneide 33 abgetragenen Späne einlaufen.

Der zweite Teilbereich 21b des Werkzeugkopfs 13 ist entsprechend ausgebildet. Er weist also ebenfalls zwei Messerplatten 17' und 19' auf, die allerdings spiegelbildlich angeordnet sind, weil sich der zweite Teilbereich 21b bei einer Drehung des Werkzeugs 1 in Richtung des Pfeils 47, wie er in Figur 3 eingezeichnet ist, im Gegenuhrzeigersinn dreht.

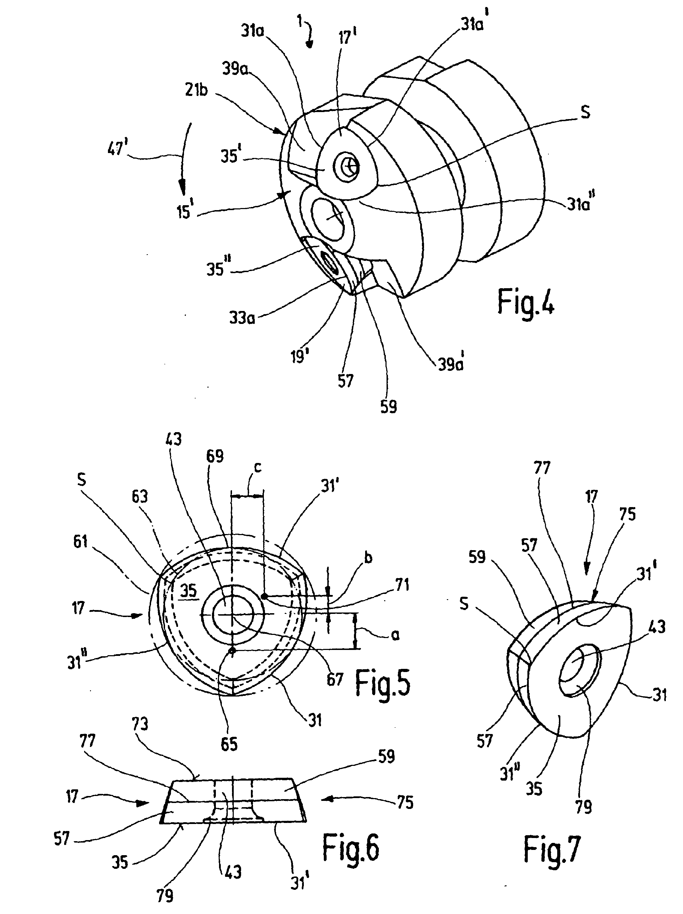

Figur 4 zeigt eine perspektivische Ansicht des Werkzeugs 1, aus der die Außenfläche 15' des zweiten Teilbereichs 21b ersichtlich wird. Insbesondere ist erkennbar, dass die erste Messerplatte 17' und die zweite Messerplatte 19' des zweiten Teilbereichs 21b quasi spiegelbildlich angeordnet sind zur ersten Messerplatte 17 beziehungsweise zur zweiten Messerplatte 19, wie im Zusammenhang mit dem ersten Teilbereich 21a in Figur 3 beschrieben wurde.

Entsprechend weist die erste Messerplatte 17' eine Schneide 31a auf, die höher liegt als der gegenüber liegende Schnittpunkt S, in dem sich die weiteren Schneiden 31a' und 31a" schneiden. Bei der Bearbeitung einer Oberfläche dreht sich der zweite Teilbereich 21b entgegen dem Uhrzeigersinn, was durch einen Pfeil 47' dargestellt ist.

In Drehrichtung gesehen befindet sich vor der ersten Schneide 17' - entsprechend den Erläuterungen zu Figur 3 - ein Spanraum 39a, in den die von der Schneide 31a abgetragenen Späne einlaufen.

Die perspektivische Ansicht gemäß Figur 4 zeigt die Schneide 33a der zweiten Messerplatte 19' und die Spanfläche 57, auf der die von der Schneide 33a abgetragenen Späne ablaufen und in den zugehörigen Spanraum 39a' einlaufen.

Die perspektivische Ansicht zeigt im Übrigen noch die Vorderseite 35' der ersten Messerplatte. Es ist außerdem die Vorderseite 35" der zweiten Messerplatte 19' erkennbar.

Die perspektivische Seitenansicht der zweiten Messerplatte 19' lässt erkennen, dass an die Spanfläche 57 ein zweiter Mantelflächenbereich 59 anschließt, der freigeschliffen ist, um eine sichere Auflage der Messerplatte im Plattensitz zu gewährleisten. Diese Ausgestaltung gilt für sämtliche Messerplatten des Werkzeugs 1.

Figur 5 zeigt eine Messerplatte des Werkzeugs 1 in Draufsicht. Da alle Messerplatten des Werkzeugs gleich ausgebildet sind, wird hier lediglich beispielhaft davon ausgegangen, dass hier die Messerplatte 17 dargestellt ist. Die Figur zeigt die Vorderseite 35 der Messerplatte, die, wie oben bereits beschrieben, annähernd dreieckig ausgebildet ist, wobei die Seitenkanten des Dreiecks nach außen gewölbt sind und die Schneiden 31, 31' und 31" bilden. In der Mitte der Messerplatte 17 ist die Ausnehmung 43 zu sehen, in die eine Spannschraube zur Befestigung der Messerplatte am Grundkörper des Werkzeugs 1 einführbar ist.

Gestrichelt ist in Figur 5 der Umkreis 61 eingezeichnet, der durch die Schnittpunkte der Schneidkanten 31 und 31' beziehungsweise 31' und 31" sowie 31" und 31 geht. In der Figur ist auch der Inkreis 63 erkennbar, der die Schneiden 31, 31' und 31" in ihren Scheitelpunkten berührt, nämlich in denen am weitesten nach außen gewölbten Bereichen. Der Krümmungsradius der Schneiden 31, 31' und 31" ist größer als der des Umkreises 61. Die Schneiden sind vorzugsweise kreisbogenförmig gekrümmt. Der Mittelpunkt 65 des Krümmungskreises der Schneide 31' liegt auf einer gedachten Mittelhalbierenden, die einerseits den Schnittpunkt der Schneiden 31 und 31" durchläuft, andererseits die Mittelachse 67 der Ausnehmung 43 und schließlich den Scheitelpunkt 69 der Schneide 31'. Alle Schneiden der Messerplatte 17 sind entsprechend ausgebildet. Hier ist beispielsweise noch der Mittelpunkt 71 des Krümmungsradius' der Schneide 31" eingezeichnet.

Im Folgenden werden beispielhaft Zahlenwerte angegeben: Der Radius des Umkreises 61 kann beispielsweise circa 15,2 mm betragen, der Radius des Inkreises 63 circa 12,7 mm. Der Radius des Krümmungskreises der Schneiden 31, 31' und 31" beträgt dann circa 19,57 mm.

Der Mittelpunkt des Krümmungskreises liegt etwa in einem Abstand von 6,87 mm von der Mittelachse 67 entfernt. Dieser Abstand gilt auch für den Mittelpunkt 65. Er ist in Figur 5 mit a bezeichnet. Der Mittelpunkt 71 liegt in einem Abstand b zu einer gedachten Horizontalen, die durch die Mittelachse 67 verläuft und beträgt bei diesem Ausführungsbeispiel circa 3,4 mm. Der Mittelpunkt 71 ist schließlich in einem Abstand c von circa 5,95 mm von der Mittellinie entfernt angeordnet, die durch den Scheitelpunkt 69 und die Mittelachse 67 verläuft. Diese Zahlenangaben sind rein beispielhaft und sollen lediglich die Dimensionsverhältnisse der Messerplatte zeigen.

Figur 6 zeigt die Messerplatte 17 in Seitenansicht. Gleiche Teile sind mit gleichen Bezugsziffern versehen, so dass insofern auf die Beschreibung zu Figur 5 und zu den übrigen Figuren verwiesen werden kann.

Die Seitenansicht der Messerplatte 17 zeigt deutlich, dass deren Vorderseite und deren Rückseite 73 eben ausgebildet sind und parallel zueinander verlaufen. Das hier dargestellte Ausführungsbeispiel ist circa 8 mm dick, das heißt die Vorderseite und Rückseite liegen in einem Abstand von circa 8 mm. Diese Ausgestaltung der Messerplatte 17 ist deshalb besonders wichtig, weil die parallel zueinander verlaufenden Vorder- und Rückseiten der Messerplatte besonders einfach herstellbar sind, nämlich im Wege des Flachschleifens. Dieses Herstellungsverfahren ist nicht nur kostengünstig sondern auch sehr genau. Der Radius der Schneiden 31, 31' und 31" ist ebenfalls sehr genau und kostengünstig herstellbar, nämlich im Wege des Rundschleifens. Der Radius der Schneiden entspricht nicht dem Radius der kugelförmigen Oberfläche 3. Der bei der Bearbeitung der Oberfläche 3 erzielte Radius wird dadurch genau vorgegeben, dass die Messerplatten in der Außenfläche des Werkzeugs 1 mehr oder weniger geneigt fixiert sind. Bei einem sehr flachen Neigungswinkel quer zu der in Figur 3 eingezeichneten senkrechten Durchmesserlinie 49 wird der Innenradius der bearbeiteten Oberfläche größer als bei einem relativ steilen Neigungswinkel der Messerplatten.

Die Umfangsfläche 75 der Messerplatte 17 setzt sich aus zwei Segmenten zusammen, nämlich einem ersten Segment, das an die Vorderseite 35 anschließt und die Spanfläche 57 der zugehörigen Schneide bildet, hier der Schneide 31'. Die Spanfläche 57 ist gegenüber einer auf der Vorderseite 35 senkrecht stehenden Linie um circa 15° geneigt. Der sich daran anschließende Mantelflächenbereich 59, der an die Rückseite 73 anstößt, ist gegenüber dieser gedachten Senkrechten um circa 20° geneigt, so dass sich zwischen diesen Segmenten der Umfangsfläche 35 ein Knick 77 ergibt.

Gestrichelt ist in Figur 6 die die Messerplatte 17 durchdringende Ausnehmung 43 angedeutet, die mit einem sich in Richtung der Vorderseite 35 erweiternden konischen Bereich 79 versehen sein kann, in dem der Kopf einer Spannschraube zu liegen kommt.

In Figur 7 ist schließlich beispielhaft die Messerplatte 17 perspektivisch dargestellt. Gleiche Teile sind mit gleichen Bezugsziffern versehen, so dass auf die Beschreibung zu den vorangegangenen Figuren verwiesen wird. Die Darstellung gemäß Figur 7 zeigt deutlich die Vorderseite 35 und die sich daran anschließende Spanfläche 57. Die Schnittlinie zwischen Vorderseite 35 und Spanfläche 57, die die Messerplatte umläuft, bildet jeweils die Schneiden 31, 31' und 31" der Messerplatte 17. Die von diesen abgetragenen Späne laufen auf der Spanfläche 57 ab und gelangen in den jeweiligen Spanraum 39 der Messerplatte.

Zur Funktion des hier beschriebenen Werkzeugs 1 ist Folgendes festzuhalten:

Das Werkzeug 1 wird dazu verwendet, konkave, kugelförmige Oberflächen zu bearbeiten. In Figur 1 ist eine derartige Oberfläche dargestellt. Das Werkzeug 1 wird in das Innere des zu bearbeitenden Werkstücks 5 eingeführt und von einer Antriebsspindel 7 sowie von einer Abstützspindel 9 gehalten, so dass es in Rotation versetzbar ist. Das Werkzeug 1 weist hier zwei Teilbereiche 21a und 21b auf, mit deren Hilfe die zu bearbeitende Oberfläche 3 einem spanabtragenden Bearbeitungsvorgang unterworfen wird. Dabei werden die Teilbereiche 21a und 21b nacheinander mit der Oberfläche des Werkstücks in Eingriff gebracht. In Figur 1 bearbeitet der linke Teilbereich 21a die Oberfläche 3'. Wenn diese fertig bearbeitet ist, wird das Werkzeug in axialer Richtung, das heißt in Richtung der Drehachse 23 nach rechts, bewegt, so dass der rechte, zweite Teilbereich 21b mit der Oberfläche 3 in Eingriff treten kann.

Das Werkzeug 1 wird bei der Bearbeitung der Oberflächen 3, 3' so in Rotation versetzt, dass es sich bei Draufsicht auf den ersten Teilbereich 21a gegen den Uhrzeigersinn und bei Draufsicht auf den zweiten Teilbereich 21b im Uhrzeigersinn dreht, was durch den Pfeil 47 in Figur 3 angedeutet ist. Da die Messerplatten 17, 17', 19, 19' in die Außenfläche 15, 15' des Werkzeugs 1 geneigt eingebracht sind, ragt jeweils eine Schneide über diese Außenfläche vor und kann mit der zu bearbeitenden Oberfläche 3, 3' in Eingriff treten. Die Schneiden der Messerplatten sind von deren Mittelpunkt aus gesehen nach außen gewölbt, also konvex ausgebildet. Sie sind vorzugsweise kreisbogenförmig gekrümmt. Bei der Bearbeitung des Werkstücks 5 treten die Schneiden nicht schlagartig über ihre ganze Länge mit dem Werkstück in Eingriff sondern zunächst mit einem vorgewölbten Teilbereich. Durch die gekrümmte Schneide ergibt sich also ein Schälschnitt, so dass die Schneide, wie gesagt, sehr weich in das Werkstück einläuft. Die Krümmung bewirkt auch, dass die Späne von der Drehachse 23 aus nach außen abgelenkt werden, damit aus dem Bearbeitungsbereich herausgeführt werden und die bearbeitete Oberfläche nicht beeinträchtigen.

Dadurch, dass die umlaufenden Spanflächen 57 der Schneiden 31, 31' und 31" der Messerplatten gegenüber der ebenen Vorderseite 35 geneigt verlaufen, also konisch in Richtung zu einer Mittelsenkrechten der Messerplatten verlaufen, wird ein positiver Spanwinkel realisiert, der seinerseits zu einem weichen Schnitt und zu einer guten Oberfläche führt.

Der mit dem Werkzeug 1 hergestellte Krümmungsradius der Oberfläche 3 entspricht nicht dem Krümmungsradius der Schneiden. Der gefertigte Krümmungsradius hängt von der Neigung der Messerplatte ab, so dass Fertigungstoleranzen der Schneiden beziehungsweise der Außenkontur der Messerplatte und Toleranzen bei der Fixierung der Messerplatten am Werkzeug 1 nicht unmittelbar die Genauigkeit der bearbeiteten Oberfläche 3, 3' beeinträchtigen. Dadurch ist auch eine Einstellung der Schneiden nicht erforderlich. Sollten sie also geringfügig um ihre Mittelachse beziehungsweise die Mittelachse 67 verdreht sein, wirkt sich dies nicht unmittelbar auf den Radius der bearbeiteten Oberfläche aus.

Es ist daher möglich, gleichartige Messerplatten mit mehreren Werkzeugen 1 zu verwenden und die Messerplatten jeweils unter einem anderen Winkel bezüglich der Außenfläche 15, 15' des Werkzeugs 1 zu befestigen. Die Messerplatten sind in eine Ausnehmung eingesetzt, die in die Außenfläche 15, 15' des Werkzeugs eingebracht ist und eine ebene Auflagefläche aufweisen. Auf dieser liegen die Messerplatten auf und werden dort von der hier nicht dargestellten Spannschraube gehalten. Die Ausnehmung im Grundkörper des Werkzeugs 1 entspricht in ihrer Kontur der Außenkontur der Messerplatten, so dass die gegenüber der am weitesten vorstehenden Schneide zurückspringenden Schneiden an der Innenfläche der Ausnehmung anliegen können, so dass die Messerplatte sicher fixiert ist.

Die hier beschriebenen Messerplatten weisen jeweils drei Schneiden 31, 31' und 31" auf. Es ist jedoch möglich, auch Messerplatten mit nur einer Schneide oder auch mit mehr als drei Schneiden einzusetzen. Das hier beschriebene Werkzeug 1 weist lediglich beispielhaft zwei Messerplatten auf. Es ist grundsätzlich auch möglich, Werkzeuge mit einer einzigen Messerplatte pro Teilbereich 21a, 21b zu realisieren oder mit mehr als jeweils zwei Messerplatten.

Es wird deutlich, dass die Messerplatten sehr einfach herstellbar sind, weil sie zwei parallel zueinander verlaufende ebene Begrenzungsflächen, nämlich die Vorderseite 35 und die Rückseite 73 aufweisen, die zueinander parallel verlaufen. Die gekrümmten Schneiden verlaufen vorzugsweise entlang eines Kreisbogens und können damit in einem Rundschliffverfahren präzise und kostengünstig hergestellt werden.

Es ist auf einfache Weise möglich, mit ein und derselben Messerplatte, also mit einer gegebenen Messerplattengeometrie, verschiedene Radien einer konkaven, kugelförmigen Oberfläche zu realisieren: Je flacher die Messerplatte angeordnet ist, um so größer wird der Radius der Innen-Kugelfläche.

Durch die spezielle Ausgestaltung der Schneiden ergibt sich ein weiches Schnittverhalten als Schälschnitt, wodurch eine gute Laufruhe und hohe Standzeiten, außerdem gegenüber herkömmlichen Messerplatten bessere Oberflächenqualitäten realisierbar sind. Der positive Spanwinkel, der durch die Neigung der Spanfläche 57 gegenüber der Vorderseite 35 gegeben ist, ergibt seinerseits einen weichen Schnitt und eine gute bearbeitete Oberfläche.

Insgesamt wird deutlich, dass das hier beschriebene Werkzeug 1 insgesamt einfach aufgebaut ist, dass die Messerplatten kostengünstig herstellbar sind und dass mit ein und derselben Messerplatte kugelförmige Innenflächen mit verschiedenen Radien hergestellt beziehungsweise bearbeitet werden können.

Entscheidend ist, dass die Schneide nicht auf ganzer Länge gleichzeitig mit der zu bearbeitenden Werkstückoberfläche in Eingriff tritt, sondern durch ihre Krümmung einen Schälschnitt ermöglicht, der die genannten Vorteile bringt.

Dadurch, dass das Werkzeug 1 symmetrisch ausgebildet ist, also zwei gleichartige Teilbereiche 21a und 21b aufweist, können innerhalb des Werkstücks 5 auf einfache Weise zwei gegenüber liegende Oberflächen 3, 3' bearbeitet werden, in denen das Werkzeug 1 in axialer Richtung, also in Richtung der Drehachse 23 verlagert wird. Diese Bewegung ist einfach realisierbar, so dass die Fertigung mittels des hier beschriebenen Werkzeugs kostengünstig realisierbar ist.

Dadurch dass die Teilbereiche 21a und 21b in einem Abstand zueinander angeordnet und über einen Verbindungssteg 25 miteinander verbunden sind, ist das Werkzeug auch auf automatischen Bearbeitungsmaschinen leicht handhabbar, wobei durch die umlaufende Nut 27 ein sicherer Halt und durch die Bohrung 29 eine exakte Positionierung gewährleistet sind.

## Patentansprüche

1. Werkzeug zur spanabtragenden Bearbeitung einer konkaven, kugelförmigen Oberfläche (3,3') eines Werkstücks (5) mit einem eine Drehachse (23) und eine konvexe Außenfläche (15) aufweisenden Werkzeugkopf (13), der mindestens eine wenigstens eine Schneide (31,31',31") aufweisende Messerplatte (17,17',19,19') umfasst, die in eine in den Grundkörper des Werkzeugkopfes (13) eingebrachte Ausnehmung eingesetzt ist und eine ebene Vorderseite (35,35') aufweist, wobei die mindestens eine Schneide (31,31',31") durch einen Bereich der Schnittlinie der Vorderseite (35) mit der Umfangsfläche (75) gebildet wird und konvex gekrümmt ist, **dadurch gekennzeichnet, dass** die mindestens eine Messerplatte (17,17';19,19') so fixiert ist, dass sie gegenüber einer gedachten Ebene, auf der die Drehachse (23) senkrecht steht, in zwei Richtungen geneigt so angeordnet ist, dass sie in einer ersten Richtung von der Drehachse (23) nach außen abfällt und in senkrechter Richtung dazu in einer zweiten Richtung geneigt angeordnet ist.

2. Werkzeug nach Anspruch 1, **dadurch gekennzeichnet, dass** die.Umfangsfläche (75) mit der Vorderseite (35, 35') der Messerplatte (17, 17', 19, 19') einen Winkel von kleiner 90° einschließt.

3. Werkzeug nach Anspruch 1 oder 2, **dadurch gekennzeichnet, dass** die Umfangsfläche (75) zwei Bereiche (57,59) aufweist, die gegenüber der Vorderseite (35,35') unterschiedlich geneigt sind.

4. Werkzeug nach einem der vorhergehenden Ansprüche, **dadurch gekennzeichnet, dass** die Messerplatte (17,17',19,19') gegenüber der tangential zur Außenfläche (15,15') des Werkzeugkopfs (13) verlaufenden Ebene in einer ersten Richtung um circa 15° bis 35°, insbesondere um circa 20° bis 30°, vorzugsweise um circa 25° geneigt ist.

5. Werkzeug nach einem der vorhergehenden Ansprüche, **dadurch gekennzeichnet, dass** die Messerplatte (17,17',19,19') gegenüber der tangential zur Außenfläche (15, 15') des Werkzeugkopfs (13) verlaufenden Ebene in einer zweiten - senkrecht zur ersten Richtung verlaufenden - Richtung um circa 5° bis 15°, insbesondere um circa 7, 5° bis 12,5°, vorzugsweise um circa 10° geneigt ist.

6. Werkzeug nach einem der vorhergehenden Ansprüche, **dadurch gekennzeichnet, dass** die Messerplatte (17, 17', 19, 19') mehrere - vorzugsweise aneinander angrenzende - Schneiden (31,31',31") aufweist.

7. Werkzeug nach einem der vorhergehenden Ansprüche, **dadurch gekennzeichnet, dass** die Messerplatte (17,17',19,19') im Wesentlichen dreieckförmig ausgebildet ist, wobei die Seitenkanten alle konvex, also nach außen, gewölbt sind.

8. Werkzeug nach einem der vorhergehenden Ansprüche, **dadurch gekennzeichnet, dass** die konvex gekrümmten Schneiden (31,31',31") kreisbogenförmig ausgebildet sind.

9. Werkzeug nach einem der vorhergehenden Ansprüche, **dadurch gekennzeichnet, dass** der Krümmungsradius der Schneiden (31, 31', 31") größer ist als der Radius eines gedachten Umkreises.

10. Werkzeug nach einem der vorhergehenden Ansprüche, **dadurch gekennzeichnet, dass** alle Schneiden (31,31',31") den gleichen Krümmungsradius aufweisen.

11. Werkzeug nach einem der vorhergehenden Ansprüche, **dadurch gekennzeichnet, dass** die Messerplatte (17,17',19,19') als Wendeplatte ausgebildet ist.

12. Werkzeug nach einem der vorhergehenden Ansprüche, **dadurch gekennzeichnet, dass** die Rückseite (73) der Messerplatte (17,17',19,19') eben ist.

13. Werkzeug nach einem der vorhergehenden Ansprüche, **dadurch gekennzeichnet, dass** die Rückseite (73) der Messerplatte (17,17',19,19') parallel zur Vorderseite (35,35') verläuft.

14. Werkzeug nach einem der vorhergehenden Ansprüche, **dadurch gekennzeichnet, dass** die Umfangsfläche (75) der Messerplatte (17,17',19,19') die Spanfläche (57) ist, auf der - bei Verwendung des Werkzeugs (1) - die von der mindestens einen Schneide (31, 31' , 31") abgetragenen Späne ablaufen.

15. Werkzeug nach einem der vorhergehenden Ansprüche, **dadurch gekennzeichnet, dass** der Werkzeugkopf (13) symmetrisch aufgebaut ist, und zwei Teilbereiche (21a,21b) aufweist, die jeweils mindestens eine Messerplatte (17,17',19,19') umfassen.

16. Werkzeug nach einem der vorhergehenden Ansprüche, **dadurch gekennzeichnet, dass** die Teilbereiche (21a,21b) gleichartig aufgebaut sind.

17. Werkzeug nach einem der vorhergehenden Ansprüche, **dadurch gekennzeichnet, dass** die Teilbereiche (21a,21b) über einen Verbindungssteg (25) miteinander verbunden sind.

18. Werkzeug nach einem der vorhergehenden Ansprüche, **dadurch gekennzeichnet, dass** der Verbindungssteg (25) eine in dessen Umfangsfläche eingelassene umlaufende Nut (27) aufweist.

19. Werkzeug nach einem der vorhergehenden Ansprüche, **dadurch gekennzeichnet, dass** der Verbindungssteg (25) eine in dessen Umfangsfläche eingelassene Bohrung (29) aufweist.

## Claims

1. Tool for chipping a concave, spherical surface (3, 3') of a work piece (5) with a tool head (13) comprising a rotary axis (23) and a convex outer surface (15), said tool head comprising at least one cutter plate (17, 17', 19, 19') comprising at least one cutting edge (31, 31', 31"), said cutter plate being inserted into a recess provided in the basic body of the tool head (13) and comprising a planar front side (35, 35'), with the at least one cutting edge (31, 31', 31") being formed by one area of the intersection line of the front side (35) with the circumferential area (75) and having a convex curvature, **characterized in that** the at least one cutter plate (17, 17', 19, 19') is fixed such that it is arranged - versus an imaginary plane to which the rotary axis (23) is perpendicular - inclined in two directions so that it drops off toward the outside in a first direction from the rotary axis (23) and, in a perpendicular direction thereto, it is arranged inclined in a second direction.

2. Tool according to claim 1, **characterized in that** the circumferential area (75) encompasses with the front side (35, 35') of the cutter plate (17, 17', 19, 19') an angle smaller than 90°.

3. Tool according to claim 1 or 2, **characterized in that** the circumferential area (75) comprises two areas (57, 59) which are differently inclined versus the front side (35, 35').

4. Tool according to any one of the preceding claims, **characterized in that** the cutter plate (17, 17', 19, 19') is inclined versus the plane extending tangentially to the outer surface (15, 15') of the tool head (13), in a first direction by approximately 15° to 35°, particularly by approximately 20° to 30°, preferably by approximately 25°.

5. Tool according to any one of the preceding claims, **characterized in that** the cutter plate (17, 17', 19, 19') is inclined versus the plane extending tangentially to the outer surface (15, 15') of the tool head (13), in a second direction - extending perpendicularly to the first direction - by approximately 5° to 15°, particularly by approximately 7.5° to 12.5°, preferably by approximately 10°.

6. Tool according to any one of the preceding claims, **characterized in that** the cutter plate (17, 17', 19, 19') comprises several cutting edges (31, 31', 31"), preferably adjacent to each other.

7. Tool according to any one of the preceding claims, **characterized in that** the cutter plate (17, 17', 19, 19') is substantially triangular in shape, with the side edges all being convex, thus with a curvature toward the outside.

8. Tool according to any one of the preceding claims, **characterized in that** the convex cutting edges (31, 31', 31") are designed in a circular arc.

9. Tool according to any one of the preceding claims, **characterized in that** the radius of curvature of the cutting edges (31, 31', 31") is larger than the radius of an imaginary circumference.

10. Tool according to any one of the preceding claims, **characterized in that** all cutting edges (31, 31', 31") have the same radius of curvature.

11. Tool according to any one of the preceding claims, **characterized in that** the cutter plate (17, 17', 19, 19') is designed as a turning plate.

12. Tool according to any one of the preceding claims, **characterized in that** the rear side (73) of the cutter plate (17, 17', 19, 19') is planar.

13. Tool according to any one of the preceding claims, **characterized in that** the rear side (73) of the cutter plate (17, 17', 19, 19') extends parallel to the front side (35, 35').

14. Tool according to any one of the preceding claims, **characterized in that** the circumferential area (75) of the cutter plate (17, 17', 19, 19') is the chipping area (57) on which - upon the use of tool (1) - the chips run off which are shaved off by the at least one cutting edge (31, 31', 31").

15. Tool according to any one of the preceding claims, **characterized in that** the tool head (13) is symmetrically designed and comprises two partial areas (21 a, 21 b) which each comprise at least one cutter plate (17, 17', 19, 19').

16. Tool according to any one of the preceding claims, **characterized in that** the partial areas (21 a, 21 b) are identical in design.

17. Tool according to any one of the preceding claims, **characterized in that** the partial areas (21 a, 21 b) are connected with each other via a connecting web (25).

18. Tool according to any one of the preceding claims, **characterized in that** the connecting web (25) comprises a circumferential groove (27) embedded in its circumferential area.

19. Tool according to any one of the preceding claims, **characterized in that** the connecting web (25) comprises a bore (29) embedded in its circumferential area.

## Revendications

1. Outil pour usiner une surface sphérique concave par enlèvement de copeaux (3,3') d'une pièce (5) doté d'une tête d'outil (13), présentant un axe rotatif (23) ainsi qu'une surface extérieure convexe (15), qui comprend au moins une plaquette de coupe (17,17',19,19'), présentant au moins une arête (31,31',31 "), qui est logée dans un évidement pratiqué dans le corps de base de la tête d'outil (13) et qui présente une face avant plane (35,35'), l'arête (31,31',31") étant formée par une partie de la ligne de coupe de la face avant (35) avec la surface circonférentielle (75) et étant courbée de manière convexe, **caractérisé en ce que** d'au moins une plaquette de coupe (17,17';19,19') est fixée de telle sorte qu'elle est, par rapport à un plan imaginaire sur lequel l'axe rotatif (23) se trouve à la verticale, disposée de manière inclinée dans deux directions de telle sorte qu'elle tombe, dans une première direction, de l'axe rotatif (23) vers l'extérieur, et est disposée dans une seconde direction, à la verticale par rapport à la première, de manière inclinée.

2. Outil selon la revendication 1, **caractérisé en ce que** la surface circonférentielle (75) forme, avec la face avant (35,35') de la plaquette de coupe (17,17',19,19'), un angle inférieur à 90°.

3. Outil selon la revendication 1 ou 2, **caractérisé en ce que** la surface circonférentielle (75) présente deux parties (57,59) qui sont différemment inclinées par rapport à la face avant (35,35').

4. Outil selon l'une des revendications précédentes, **caractérisé en ce que** la plaquette de coupe (17,17',19,19') est, par rapport au plan tangent à la surface extérieure (15,15') de la tête d'outil (13), inclinée dans une première direction d'environ 15° à 35°, en particulier d'environ 20° à 30°, de préférence d'environ 25°.

5. Outil selon l'une des revendications précédentes, **caractérisé en ce que** la plaquette de coupe (17,17',19,19') est, par rapport au plan tangent à la surface extérieure (15,15') de la tête d'outil (13), inclinée dans une seconde direction, à la verticale par rapport à la première, d'environ 5° à 15° en particulier d'environ 7,5° à 12,5°, de préférence d'environ 10°.

6. Outil selon l'une des revendications précédentes, **caractérisé en ce que** la plaquette de coupe (17,17',19,19') présente plusieurs arêtes (31,31',31"), de préférence adjacentes.

7. Outil selon l'une des revendications précédentes, **caractérisé en ce que** la plaquette de coupe (17,17',19,19') présente essentiellement une forme triangulaire, les arêtes latérales étant toutes courbées de manière convexe, soit saillantes vers l'extérieur.

8. Outil selon l'une des revendications précédentes, **caractérisé en ce que** les arêtes courbées de manière convexe (31,31',31") présentent la forme d'un arc de cercle.

9. Outil selon l'une des revendications précédentes, **caractérisé en ce que** le rayon de courbure des arêtes (31,31',31") est supérieur à celui d'une circonférence imaginaire.

10. Outil selon l'une des revendications précédentes, **caractérisé en ce que** toutes les arêtes (31,31',31") présentent le même rayon de courbure.

11. Outil selon l'une des revendications précédentes, **caractérisé en ce que** la plaquette de coupe (17,17',19,19') a été conçue comme une plaquette réversible.

12. Outil selon l'une des revendications précédentes, **caractérisé en ce que** la face arrière (73) de la plaquette de coupe (17,17',19,19') est plane.

13. Outil selon l'une des revendications précédentes, **caractérisé en ce que** la face arrière (73) de la plaquette de coupe (17,17',19,19') est parallèle par rapport à la face avant (35,35').

14. Outil selon l'une des revendications précédentes, **caractérisé en ce que** la surface circonférentielle (75) de la plaquette de coupe (17,17',19,19') constitue la face de coupe (57) sur laquelle, quand l'outil (1) est utilisé, s'écoulent les copeaux enlevés d'au moins une arête (31,31',31").

15. Outil selon l'une des revendications précédentes, **caractérisé en ce que** la tête d'outil (13) est conçue de façon symétrique et présente deux parties (21a,21b) comprenant respectivement au moins une plaquette de coupe (17,17',19,19').

16. Outil selon l'une des revendications précédentes, **caractérisé en ce que** les parties (21a,21b) sont conçues de manière identique.

17. Outil selon l'une des revendications précédentes, **caractérisé en ce que** les parties (21a,21b) sont reliées l'une à l'autre par une traverse (25).

18. Outil selon l'une des revendications précédentes, **caractérisé en ce que** la traverse (25) présente une rainure (27) réalisée sur toute la surface circonférentielle de celle-ci.

19. Outil selon l'une des revendications précédentes, **caractérisé en ce que** la traverse (25) présente un perçage (29) réalisé dans la surface circonférentielle de celle-ci.
